# EUROPÄISCHE PATENTSCHRIFT

(11) **EP 4 505 291 B1**
(45) Veröffentlichungstag und Bekanntmachung des Hinweises auf die Patenterteilung: **29.07.2026**
(21) Anmeldenummer: 23821168.4
(22) Anmeldetag: 05.12.2023
(51) Int. Cl.: G06F 8/60, G06F 11/3668

(54) **VERFAHREN UND SYSTEM ZUR VERTEILUNG VON SOFTWAREKOMPONENTEN AUF FAHRZEUGE**
METHOD AND SYSTEM FOR DISTRIBUTING SOFTWARE COMPONENTS TO VEHICLES
PROCÉDÉ ET SYSTÈME DE DISTRIBUTION DE COMPOSANTS LOGICIELS À DES VÉHICULES

(30) Priorität: 20.12.2022 DE 102022004825
(43) Veröffentlichungstag der Anmeldung: 12.02.2025
(73) Patentinhaber: Mercedes-Benz Group AG, 70372 Stuttgart (DE)
(72) Erfinder: SCHÜTZNER, Johannes, 71032 Böblingen (DE); MÜLLER, Frank, 76149 Karlsruhe (DE); NISCH, Matthias, 72108 Rottenburg (DE); BECKER, Fabrice, 70190 Stuttgart (DE); FISCHER, Moritz, 72805 Lichtenstein (DE)
(74) Vertreter: Novagraaf Group
(86) Internationale Anmeldenummer: PCT/EP2023/084317
(87) Internationale Veröffentlichungsnummer: WO 2024/132506

(56) Entgegenhaltungen:
- WO-A1-2022/193298
- BREBION ANTHONY: "Canary Deployment and Canary Testing Explained", 10 July 2021 (2021-07-10), pages 1 - 18, XP093134829, Retrieved from the Internet <URL:https://www.abtasty.com/blog/canary-deployments/> [retrieved on 20240226]
- ANONYMOUS: "Continuous testing - Wikipedia", 13 September 2022 (2022-09-13), pages 1 - 7, XP093134983, Retrieved from the Internet <URL:https://en.wikipedia.org/w/index.php?title=Continuous_testing&oldid=1110043748> [retrieved on 20240226]

## Beschreibung

Die Erfindung betrifft ein Verfahren und ein System zur Verteilung von mindestens einer Softwarekomponente auf ein Fahrzeug.

Das Dokument WO 2022/162815 A1 beschreibt eine Softwareaktualisierungsvorrichtung umfassend einen Controller und eine Speichervorrichtung, welche Software für ein Fahrzeug anhand von Aktualisierungsdaten aktualisiert. Die Speichervorrichtung speichert ein allgemeines Paket, das mindestens die Aktualisierungsdaten umfasst, sowie Identifizierungspakete. Jedes Identifizierungspaket umfasst Paketidentifizierungsinformationen bezogen auf das allgemeine Paket sowie Fahrzeugidentifizierungsinformationen, die den Paketidentifizierungsinformationen zugeordnet sind und die ein Fahrzeug identifizieren. Der Controller überträgt an ein Zielfahrzeug, auf dem eine Software aktualisiert werden soll, ein Identifizierungspaket umfassend die mit dem Zielfahrzeug assoziierten Fahrzeugidentifizierungsinformationen. Auf Anforderung des Zielfahrzeugs überträgt der Controller dorthin das allgemeine Paket, auf welches sich die in dem Identifizierungspaket enthaltene Paketidentifizierungsinformation bezieht.

Das Dokument US 2016/0170775 A1 beschreibt ein Verfahren, bei dem ein Fahrzeug eine Softwareaktualisierung empfängt, die für ein Steuergerät des Fahrzeugs bestimmt ist. Die Kompatibilität zu den Steuergeräten des Fahrzeugs wird anhand von Token ermittelt, welche die jeweiligen Softwareversionsstände der Steuergeräte angeben. Die Softwareaktualisierung wird aktiviert, wenn eine zulässige Konfiguration von Softwareversionsständen ermittelt wurde. Ein Steuergerät eines Fahrzeugs kann Token eines anderen Steuergeräts des Fahrzeugs empfangen, die deren jeweilige Softwareversionsstände anzeigen. Anhand der Token wird ermittelt, ob das Steuergerät dasjenige mit dem aktuellsten Softwarestand ist. In diesem Fall wird die Kompatibilität der Versionsstände ermittelt. Andernfalls wird das von demjenigen Steuergerät ermittelte Kompatibilitätsergebnis bezogen, welches den aktuellsten Softwarestand aufweist.

Das Dokument US 2019/0139332 A1 beschreibt ein Verfahren zur Bewertung der Kompatibilität einer ersten Systemkomponente eines Fahrzeugs. Das Verfahren umfasst die folgenden Schritte: Bereitstellen einer Datenbank umfassend Fahrzeug-Plattform-Konfigurationsinformationen mit Konfigurationsinformationen zu zwei oder mehr Fahrzeugmodellen, wobei jedes Fahrzeugmodell mindestens eine Sicht umfasst, wobei jede Sicht mindestens eine Systemkomponente umfasst, wobei jede Systemkomponente Konfigurationsinformationen umfasst und wobei mindestens zwei Systemkomponenten von zwei verschiedenen Fahrzeugmodellen zur gleichen Sicht gehören. Ferner umfasst das Verfahren die Bestimmung der Kompatibilität zwischen der ersten Systemkomponente und mindestens einer weiteren Systemkomponente der besagten Fahrzeug-Plattform durch Vergleichen der jeweiligen Konfigurationsinformationen und die Rückgabe eines Kompatibilitätsergebnisses basierend darauf, ob die erste Systemkomponente als mit der mindestens einen weiteren Systemkomponente kompatibel ermittelt wurde.

Das Dokument WO 2022/193298 A1 beschreibt ein Verfahren für eine Anwendung in einem Fahrzeug. Das von einem Fahrzeugserver ausführbare Verfahren umfasst die Ermittlung von verhaltensorientierten Informationen über ein Fahrzeug. Die verhaltensorientierten Informationen können dazu verwendet werden, die Zugehörigkeit des Fahrzeugs zu einer ersten Gruppe von Fahrzeugen zu ermitteln, die aktualisiert werden sollen. In einer Ausführungsform umfasst das Verfahren ferner das Empfangen einer Aktualisierungsmarkierung des Fahrzeugs von einem Anwendungsserver, wenn das Fahrzeug aktualisiert wird.

Das Dokument Brebion Anthony: "Canary Deployment and Canary Testing Explained", 10. Juli 2021, https://www.abtasty.com/blog/canary-deployments/ beschreibt ein als Canary-Testing bezeichnetes Verfahren zur Auswahl von Nutzern, denen eine neue Version einer Softwareanwendung bereitgestellt wird.

Der Erfindung liegt die Aufgabe zu Grunde, ein verbessertes Verfahren zur Verteilung von mindestens einer Softwarekomponente auf ein Fahrzeug anzugeben. Diese Aufgabe wird mit einem Verfahren mit den Merkmalen des Anspruchs 1 gelöst. Ferner liegt der Erfindung die Aufgabe zu Grunde, ein verbessertes System zur Verteilung von mindestens einer Softwarekomponente auf ein Fahrzeug anzugeben. Diese Aufgabe wird mit einem System mit den Merkmalen des Anspruchs 8 gelöst.

Vorteilhafte Ausgestaltungen der Erfindung sind Gegenstand der Unteransprüche.

Bei einem Verfahren zur Verteilung von mindestens einer Softwarekomponente auf mindestens ein Fahrzeug wird gemäß einem ersten Aspekt der Erfindung aus einer Gesamtheit von Fahrzeugen, die mindestens ein bezüglich Softwarekomponenten relevantes gemeinsames Ausstattungsmerkmal aufweisen, mindestens eine Gruppe von Fahrzeugen, im Folgenden als Flotte bezeichnet, gebildet. Derartige, für Softwarekomponenten relevante Ausstattungsmerkmale (im Folgenden auch als softwarerelevante Ausstattungsmerkmale bezeichnet) können beispielsweise Eigenschaften eines oder mehrerer Steuergeräte sein, die in den Fahrzeugen verbaut sind, beispielsweise eine Hardwareplattform, ein Betriebssystem oder eine Mehrzahl von darauf installierten Softwarekomponenten, beispielsweise Treibern oder Off-The-Shelf Software.

Mit anderen Worten: Erfindungsgemäß werden Flotten so gewählt, dass Fahrzeuge einer ersten Flotte bezüglich dieser softwarerelevanten Ausstattungsmerkmale gleich sind und es mindestens eine weitere Flotte gibt, der andere Fahrzeug zugeordnet sind, die jedoch untereinander und zur ersten Flotte gleiche softwarerelevante Ausstattungsmerkmale aufweisen.

Jeder Flotte wird mindestens ein Flottentyp und/oder ein Mindest - Qualitätszustand und/oder ein Bestimmungszweck zugeordnet. Optional können einer Flotte weitere Attribute zugeordnet sein.

Ein Flottentyp kann eine Flotte beispielsweise als für Testzwecke vorgesehen kennzeichnen. Alternativ kann ein Flottentyp eine produktiv hergestellte oder eingesetzte Flotte kennzeichnen, die Fahrzeuge umfasst, die bei einem Kunden eingesetzt sind oder potentiell an Kunden verkauft werden können. Ein Flottentyp kann auch eine für besondere Zwecke vorgesehene Flotte kennzeichnen, die beispielsweise Fahrzeuge umfasst, die für bestimmte Marketingveranstaltungen vorgesehen sind.

Anhand des Bestimmungszwecks kann eine Flotte beispielsweise für den Einsatz beim Kunden oder die Auslieferung an einen Kunden einerseits und die Durchführung von Tests während der Entwicklung von Softwarekomponenten andererseits gekennzeichnet werden. Ein Mindest - Qualitätszustand kennzeichnet den Qualitätszustand, das heißt: den Grad an erfolgreich abgeschlossenen Qualitätssicherungsmaßnahmen, den Softwarekomponenten aufweisen müssen, damit sie auf Fahrzeugen einer Flotte ausgerollt werden können.

Der Bildung von Flotten mit zugeordneten Attributen liegt die Idee zu Grunde, die Gesamtheit von Fahrzeugen, die technisch (das heißt: durch ihre softwarerelevanten Ausstattungsmerkmale) für die Installation einer Softwarekomponente geeignet sind, in disjunkte Teilmengen zu unterteilen und das Ausrollen von Softwarekomponenten abhängig von der Zuordnung eines Fahrzeugs zu einer dieser Teilmengen zu gestalten. Dabei kann sich die Zusammensetzung von Flotten (das heißt: die Zuordnung individueller Fahrzeuge) dynamisch ändern, beispielsweise durch einen Verkauf oder einen Rückkauf, durch eine technische Änderung. Auch kann durch neue oder geänderte Softwarekomponenten und deren nachfolgend noch genauer beschriebene Zusammenfassung zu Softwarepaketen die Partitionierung der Gesamtmenge von Fahrzeugen in Flotten geändert werden.

Es wird mindestens ein Softwarepaket gebildet, das jeweils mindestens eine Softwarekomponente in einer dem Softwarepaket dauerhaft zugeordneten Version umfasst, wobei jede Softwarekomponente zu dem mindestens einen gemeinsamen Ausstattungsmerkmal mindestens einer Flotte kompatibel ist. Wenn das Softwarepaket eine Mehrzahl von Softwarekomponenten umfasst, so sind diese auch zueinander kompatibel ausgewählt.

Einem Softwarepaket sind insbesondere diejenigen softwarerelevanten Ausstattungsmerkmale zugeordnet, die für eine Installation und einen Betrieb der in dem Softwarepaket umfassten Softwarekomponenten erforderlich sind, beispielsweise eine bestimmte Hardwareplattform für Steuergeräte, auf denen die Installation mindestens einer der Softwarekomponenten des Softwarepakets vorgesehen ist.

Jedem Softwarepaket wird ferner ein Qualitätszustand zugeordnet, der vom Ergebnis von Qualitätssicherungsmaßnahmen abhängt, die auf dem Softwarepaket ausgeführt werden.

Beispielsweise kann ein erster Qualitätszustand "neu" zugeordnet werden, wenn dem Softwarepaket die erste Softwarekomponente zugeordnet wurde. Wenn das Softwarepaket mit seiner Gesamtheit von Softwarekomponenten vollständig getestet wurde, kann der Qualitätszustand "bereit zur Auslieferung" zugeordnet werden. Dazwischenliegend können, abhängig vom Fortschritt der Qualitätssicherungsmaßnahmen, weitere Qualitätszustände zugeordnet werden.

Erfindungsgemäß wird ein Softwarepaket jeweils mindestens einer Flotte anhand des mindestens einen gemeinsamen Ausstattungsmerkmals sowohl der Flotte als auch des Softwarepakets sowie anhand des Flottentyps und/oder des Mindest - Qualitätszustands und/oder des Bestimmungszwecks der jeweiligen Flotte zugeordnet.

Beispielhaft werden einer Flotte vom Typ "Kundenfahrzeuge" mit dem Mindest-Qualitätszustand "bereit zur Auslieferung" somit Softwarepakete nur dann zugeordnet und für ein Download zugewiesen, wenn sie mit den softwarerelevanten Ausstattungsmerkmalen dieser Flotte kompatibel sind und zudem den Qualitätszustand "bereit zur Auslieferung" aufweisen.

Auf diese Weise wird verhindert, dass Softwarekomponenten mit unzureichend gesichertem Qualitätszustand in kritische Einsatzumgebungen ausgerollt werden.

Insgesamt wird zudem die Komplexität des Ausrollens von Softwarekomponenten erheblich reduziert, da gegenüber dem Stand ein Zuordnungsproblem mit einer viel geringeren Anzahl von Entitäten zu lösen ist, indem einerseits zueinander kompatible Softwarekomponenten in Softwarepaketen zusammengefasst sind und andererseits zueinander äquivalente Fahrzeuge in Flotten zusammengefasst sind.

Insbesondere ist ein automatisiertes Ausrollen von Softwarekomponenten für Testzwecke möglich. Dadurch werden agile Softwarelebenszyklen ermöglicht, die eine schnellere und effizientere Softwareentwicklung gestatten.

Darüber hinaus erlaubt das erfindungsgemäße Verfahren das Nachvollziehen der Softwareverteilung. Insbesondere kann protokolliert werden, welche Flotten von Fahrzeugen wann welche Softwarepakete in welchem Qualitätszustand erhalten haben.

Ferner kann anhand der Gruppierung in Flotten vor der Einführung oder Änderung von Regeln bei der Zuordnung von Softwarepaketen zu Fahrzeugen deren Auswirkung vorab einfach simuliert werden. Dadurch können Kollisionen bei der Verteilung von Softwarekomponenten verhindert werden.

Ferner gestattet die Gruppierung in Flotten und deren Beschreibung über einen Bestimmungszweck die passgenaue Bedienung von Kundengruppen. Somit können Pakete von Softwarefunktionen für spezielle Kundengruppen angepasst und zielgenau ausgerollt werden.

Bei einer Ausführungsform werden für eine Gesamtheit von Fahrzeugen mit mindestens einem gemeinsamen Ausstattungsmerkmal mindestens eine erste Flotte mit einem für Testzwecke vorgesehenen Flottentyp sowie mindestens eine zweite Flotte mit einem für die Auslieferung an und/oder den Betrieb bei einen Kunden vorgesehenen Flottentyp gebildet. Der ersten Flotte wird ein anderer Mindest - Qualitätszustand zugeordnet als der zweiten Flotte, und zwar derart, dass ein Softwarepaket mit einem für Testzwecke vorgesehenen Qualitätszustand dem mindestens einen Fahrzeug der ersten Flotte, nicht jedoch dem mindestens einen Fahrzeug der zweiten Flotte zugeordnet wird.

Mit dieser Ausführungsform wird erreicht, dass für Testzwecke vorgesehene Softwarekomponenten leicht, insbesondere automatisiert, in Testumgebungen ausgerollt werden und dass zugleich Fahrzeuge in operativen Einsatzumgebungen, insbesondere solche Fahrzeuge, die bei einem Kunden eingesetzt oder für einen solchen Einsatz vorbereitet werden, vor dem Einsatz von unreifen Softwarekomponenten geschützt werden.

Bei einer Ausführungsform werden der einem Softwarepaket jeweils zugeordnete Qualitätszustand sowie ein Mindest - Qualitätszustand, der jeweils einer Flotte zugeordnet wird, einer nach dem Qualitätsreifegrad geordneten Liste entnommen, die die Werte "neu", "Paketbildung abgeschlossen", "Integrationstests abgeschlossen", "Qualitätsmanagement-Tests abgeschlossen" umfasst.

Der Wert "neu" wird einem Softwarepaket zugeordnet, das neu gebildet wird, das heißt: dem eine erste Softwarekomponente zugeordnet wurde.

Der Wert "neu" wird durch den Wert "Paketbildung abgeschlossen" ersetzt, nachdem sämtliche Softwarekomponenten zugeordnet wurden.

Der Wert "Paketbildung abgeschlossen" wird durch den Wert "Integrationstests abgeschlossen" ersetzt, nachdem die für die Integrationstests vorgesehene Qualitätssicherungsmaßnahmen erfolgreich waren.

Der Wert "Integrationstests abgeschlossen" wird durch den Wert "Qualitätsmanagement-Tests abgeschlossen" ersetzt, nachdem sämtliche in den Qualitätssicherungsmaßnahmen vorgesehene Tests erfolgreich abgeschlossen wurden.

Mit dieser Ausführungsform kann das Ausrollen von Softwarepaketen auf Flotten von Fahrzeugen besonders feingranular und detailliert und dennoch automatisiert erfolgen. Insbesondere können auch durch Erweiterung der Liste von Werten für Qualitätszustände sehr spezifische Testumgebungen automatisiert ausgewählt und Softwarepakete dorthin ausgerollt werden.

Bei einer Ausführungsform wird bei einem Wechsel des einem ursprünglichen Softwarepaket zugeordneten Qualitätszustands vom Wert "neu" in einen anderen Wert (das heißt: bei der Zuordnung eines neuen, von "neu" abweichenden Wertes) eine neue Version dieses Softwarepakets erzeugt und dieser neuen Version ein Qualitätszustand mit dem Wert "neu" zugeordnet, wobei die der ursprünglichen Version des Softwarepakets zugeordneten Softwarekomponenten der neuen Version des Softwarepakets zugeordnet werden. Dabei ist es möglich, dass die Softwarekomponenten der neuen Version des Softwarepakets in einer anderen, vorzugsweise neueren Version zugeordnet werden als dem ursprünglichen Softwarepaket.

Auf diese Weise kann ein Softwarepaket fortlaufend weiterentwickelt werden, ohne die Stabilität in einer operativen Betriebsumgebung, insbesondere in den bei einem Kunden eingesetzten oder für ihn vorgesehenen Fahrzeugen, zu beeinträchtigen.

Bei einer Ausführungsform wird ein Softwarepaket erzeugt (das heißt: es werden ihm Softwarekomponenten zugeordnet). Anschließend wird das mindestens eine für dieses Softwarepaket erforderliche gemeinsame Ausstattungsmerkmal identifiziert. Aus der zu dem Softwarepaket kompatiblen (das heißt: das mindestens eine gemeinsame Ausstattungsmerkmal aufweisenden) Menge von Fahrzeugen wird mindestens eine Flotte gebildet. Bevorzugt werden eine erste und eine zweite Flotte gebildet, wobei der Flottentyp und/oder Bestimmungszweck der ersten Flotte einem operativen Einsatz entsprechend festgelegt wird und der Flottentyp und/oder Bestimmungszweck der zweiten Flotte einem Einsatz zur Qualitätssicherung, insbesondere zur Verifizierung und/oder Testung entsprechend festgelegt wird.

Ein Vorteil dieser Ausführungsform besteht darin, dass damit die Bildung von Flotten besonders gut automatisiert werden kann.

Bei einer Ausführungsform wird bei der Erzeugung eines Softwarepakets geprüft, ob das dem Softwarepaket zugrunde liegende mindestens eine erforderliche gemeinsame Ausstattungsmerkmal mit dem mindestens einen erforderlichen gemeinsamen Ausstattungsmerkmal eines anderen Softwarepakets in Konflikt gerät. Insbesondere wird die Erzeugung eines Softwarepakets dann zurückgewiesen, wenn dem zu erzeugenden Softwarepaket ein erforderliches Ausstattungsmerkmal oder Satz von erforderlichen Ausstattungsmerkmalen zugrunde liegt, das oder der bereits einem anderen (existierenden) Softwarepaket zugrunde liegt oder zugeordnet ist.

Auf diese Weise wird vermieden, dass einem Fahrzeug mehrere Softwarepakete zugeordnet werden. Somit können auch Mehrdeutigkeiten in der Zuordnung von Softwarekomponenten verschiedener Versionen zu einem Fahrzeug vermieden werden.

Gemäß einem zweiten Aspekt der Erfindung weist ein Software-Verteilungssystem zur Verteilung von mindestens einer Softwarekomponente auf mindestens ein Fahrzeug eine Fahrzeugkonfigurations-Datenbank, ein Anwendungs-Verwaltungssystem, ein Softwarepaket-Verwaltungssystem, ein Flotten-Verwaltungssystem sowie eine Paket-Distributionskomponente auf.

Die Fahrzeugkonfigurations-Datenbank ist zur Zuordnung von Ausstattungsmerkmalen zu einem Fahrzeug eingerichtet. Ein Fahrzeug kann dabei durch eine als Vehicle Identification Number (VIN) bezeichnete Zahl oder Zeichenkette eindeutig bestimmt sein. Entsprechend seiner VIN kann jedem Fahrzeug in der Fahrzeugkonfigurations-Datenbank ein Satz von Ausstattungsmerkmalen, beispielsweise Hardwareplattform, Entwicklungsstand, Systemsoftware und/oder weitere Softwarekomponenten für jedes Steuergerät des Fahrzeugs zugeordnet sein.

Das Anwendungs-Verwaltungssystem ist zur Verwaltung von Softwarekomponenten mit zugeordneten Versionen eingerichtet, beispielsweise in der Art eines Software-Repository.

Das Softwarepaket-Verwaltungssystem ist zur Erfassung von mindestens einem Softwarepaket umfassend jeweils mindestens eine Softwarekomponente sowie zur Zuordnung von einem Qualitätszustand zu dem mindestens einen Softwarepaket eingerichtet.

Das Flotten-Verwaltungssystem ist zur Zuordnung eines Fahrzeugs zu einer Flotte sowie zur Zuordnung von mindestens einem Ausstattungsmerkmal sowie von einem Mindest - Qualitätszustand und/oder einem Flottentyp und/oder einem Bestimmungszweck zu einer Flotte eingerichtet.

Die Paket-Distributionskomponente ist zur Zuordnung von einem Softwarepaket zu dem mindestens einen Fahrzeug einer Flotte anhand des mindestens einen gemeinsamen Ausstattungsmerkmals sowohl der Flotte als auch des Softwarepakets, anhand des Qualitätszustands des Softwarepakets sowie anhand des Flottentyps und/oder des Mindest - Qualitätszustands und/oder des Bestimmungszwecks der jeweiligen Flotte eingerichtet.

Optional ist die Paket-Distributionskomponente für eine Abfrage von einem Fahrzeug aus vorgesehen, wobei anhand der VIN des abfragenden Fahrzeugs dessen Zuordnung zu einer Flotte bestimmt, das dieser Flotte zugeordnete Softwarepaket ermittelt und auf das Fahrzeug übertragen wird.

Die Vorteile des erfindungsgemäßen Software-Verteilungssystems entsprechen den Vorteilen des erfindungsgemäßen Verfahrens zur Verteilung von Softwarekomponenten gemäß dem ersten Aspekt der Erfindung.

In einer Ausführungsform sind das Anwendungs-Verwaltungssystem und/oder das Softwarepaket-Verwaltungssystem und/oder das Flotten-Verwaltungssystem und/oder die Paket-Distributionskomponente und/oder die Fahrzeugkonfigurations-Datenbank als Backendsystem ausgebildet und werden außerhalb eines Fahrzeugs bereitgestellt. Dadurch kann ein Software-Verteilungssystem mit guter Verfügbarkeit bereitgestellt werden, das besonders gut skalierbar ist.

Ausführungsbeispiele der Erfindung werden im Folgenden anhand von Zeichnungen näher erläutert.

Dabei zeigen:
- Fig. 1: schematisch ein Software-Verteilungssystem nach dem Stand der Technik und
- Fig. 2: schematisch ein Software-Verteilungssystem umfassend ein Paket-Managementsystem und ein Flotten-Managementsystem.

Einander entsprechende Teile sind in allen Figuren mit den gleichen Bezugszeichen versehen.

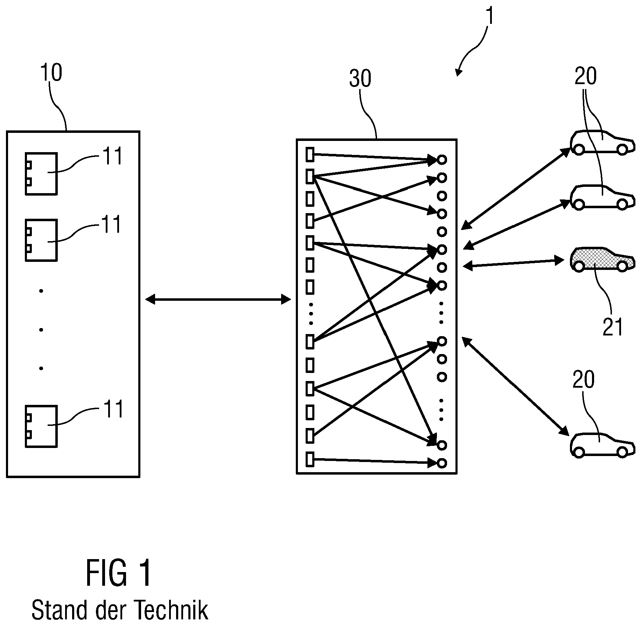

Figur 1 zeigt schematisch ein Software-Verteilungssystem 1 nach dem Stand der Technik, das zur Verteilung von Softwarekomponenten 11 auf Fahrzeuge 20, 21 eingerichtet ist. Die Softwarekomponenten 11 werden von einem Software-Repository 10 verwaltet und bereitgestellt.

Die Softwarekomponenten 11 können beispielsweise als Programme, Applikationen, Laufzeitbibliotheken, Konfigurationsdateien oder Multimedia-Daten ausgeprägt sein und sind im allgemeinsten Sinne als Ressourcen zu verstehen, die selbst als Programm auf einem in Figur 1 nicht näher dargestellten Steuergerät eines Fahrzeugs 20, 21 ablaufen oder auf die zur Laufzeit von einem solchen Programm aus zugegriffen wird. Solche Steuergeräte, beispielsweise als Head Units bezeichnete Infotainment - Geräte, können in großer Anzahl und in verschiedenen Ausführungsvarianten in Fahrzeugen 20, 21 eingesetzt werden. Ausführungsvarianten können sich beispielsweise in der Hardwarekonfiguration und/oder in der Softwarekonfiguration unterscheiden. Zudem können sich auch gleiche Ausführungsvarianten eines Steuergeräts in der Version, das heißt: hinsichtlich des Entwicklungsstands, unterscheiden.

Fahrzeuge 20, 21 verschiedener Fahrzeugtypen können gleiche, aber auch auf fahrzeugtypenspezifisch verschiedene Softwarekomponenten 11 zugeordnet sein.

Unter den Fahrzeugen 20, 21 können Fahrzeuge gleichen, aber auch verschiedenen Typs sein, wobei auch Fahrzeuge gleichen Typs unterschiedliche Ausstattungsvarianten und - versionen aufweisen können. Beispielsweise können zwei Fahrzeuge 20, 21 desselben Fahrzeugtyps für ein gewisses, in Figur 1 nicht näher dargestelltes Steuergerät verschiedene Hardware-Plattformen, verschiedene Hardware-Versionen (das heißt: verschiedene Entwicklungsstände einer Hardware-Plattform) und/oder verschiedene Software-Versionen aufweisen.

Zudem kann auf einem Fahrzeug 20, 21 eine Mehrzahl von Applikationen oder Programmen installiert sein, die auf gemeinsam genutzte Softwarekomponenten 11 zurückgreifen. Bei einer Änderung einer solchen gemeinsam genutzten Softwarekomponente 11 muss dann die Verträglichkeit mit sämtlichen dieser Applikationen oder Programmen berücksichtigt werden.

Die Zuordnung von Softwarekomponenten 11 zu einem individuellen ersten Fahrzeug 21 erfordert somit die Berücksichtigung des Fahrzeugtyps, der Ausstattungsmerkmale, der Entwicklungsstände (Versionsnummern) der bereits auf dem ersten Fahrzeug 21 installierten Hardware und Software sowie die Berücksichtigung aller weiteren diesem ersten Fahrzeug 21 zuzuordnenden Softwarekomponenten 11. Es ist möglich, dass bestimmte Softwarekomponenten 11 sowohl dem ersten Fahrzeug 21 als auch weiteren Fahrzeugen 20 zugeordnet werden, andere Softwarekomponenten 11 jedoch nicht.

Bekannte Verfahren lösen dieses Zuordnungsproblem mit einer zentralen Fahrzeug-Zuordnungskomponente 30, die einem Fahrzeug 20, 21 oder einer Gruppe von Fahrzeugen 20, 21 Softwarekomponenten 11 zuweist. Ein individuelles Fahrzeug 20, 21 kann anhand eines Identifikators, beispielsweise anhand einer als Vehicle Identification Number (VIN) bezeichneten Zeichenkette, identifiziert werden. Bei einer Anforderung zur Softwareaktualisierung kann ein Fahrzeug 20, 21 einen solchen Identifikator übermitteln, anhand dem die zentrale Fahrzeug-Zuordnungskomponente 30 die dem jeweiligen Fahrzeug 20, 21 zugeordneten Softwarekomponenten 11 ermittelt und an das Fahrzeug 20, 21 überträgt. Wegen der außerordentlich großen Anzahl von Fahrzeugen 20, 21 und der großen Anzahl von Softwarekomponenten 11, die zudem für verschiedene Hardwarekonfigurationen unterschiedlich ausgebildet und zudem jeweils in verschiedenen Versionen vorliegen können, ist ein solches Zuordnungsverfahren jedoch sehr komplex.

Zur Vereinfachung gruppieren bekannte Fahrzeug-Zuordnungskomponenten 30 einerseits Fahrzeuge 20, 21 in Fahrzeuggruppen, beispielsweise in eine Gruppe von Testfahrzeugen, die zur internen Testung von Softwarekomponenten 11 eingesetzt werden, und in eine Gruppe von Kundenfahrzeugen. Andererseits gruppieren bekannte Fahrzeug-Zuordnungskomponenten 30 Softwarekomponenten 11 in Pakete. Ein solches Paket umfasst eine Mehrzahl von Softwarekomponenten 11 und ist üblicherweise einer oder mehreren Gruppen von Fahrzeugen 20, 21 zugeordnet.

Demnach können beispielsweise für Testzwecke neue Pakete erstellt und einer gewissen Gruppe von Fahrzeugen 20, 21 zugeordnet werden. Während dieses Verfahren zwar die Komplexität des Zuordnungsproblems verringert, besteht die Gefahr, dass Pakete, die eine gewisse Menge von Softwarekomponenten 11 umfassen, ohne jedoch deren jeweilige Entwicklungsstände zu fixieren, nicht oder unzureichend getestet auf Kundenfahrzeuge ausgerollt werden.

Beispielsweise kann ein solches Paket drei Softwarekomponenten 11 umfassen, die vereinfacht mit "A", "B" und "C" bezeichnet werden sollen. Das Paket wird zunächst mittels der Fahrzeug-Zuordnungskomponente 30 einer Gruppe von Testfahrzeugen zugeordnet. Nach erfolgreichem Test wird das Paket alternativ oder zusätzlich einer Gruppe von Kundenfahrzeugen zugeordnet. Nachfolgend wird die mit "B" bezeichnete Softwarekomponenten 11 in einer neuen Version (einem neuen Entwicklungsstand) bereitgestellt.

Diese Änderung wird unmittelbar für alle Fahrzeuge 20, 21 wirksam, denen das Paket mittels der Fahrzeug-Zuordnungskomponente 30 zugeordnet ist, und somit nicht nur für die Testfahrzeuge, sondern auch für Kundenfahrzeuge. Somit können im Herstellprozess, aber auch bei einer Softwareaktualisierung noch nicht oder erst unvollständig getestete Softwarekomponenten 11 auf Kundenfahrzeugen installiert werden. Dadurch werden die Zuverlässigkeit und Betriebssicherheit von Fahrzeugen 20, 21 beeinträchtigt.

Ferner ist es möglich, dass durch die Gruppierung von Fahrzeugen 20, 21 ein erstes Fahrzeug 21 mehreren solchen Gruppen zugeordnet wird, denen jeweils ein Paket oder mehrere Pakete mit Softwarekomponenten 11 zugeordnet sind. Es ist dadurch möglich, dass mehrere, verschiedenen Gruppen zugewiesene Pakete für das erste Fahrzeug 21 in Frage kommen. Dadurch können unbeabsichtigt miteinander unverträgliche Softwarekomponenten 11 auf dem ersten Fahrzeug 21 installiert werden. Zudem ist es möglich, dass durch die Zuordnung mehrerer solcher Pakete zu einem Fahrzeug 21 eine Mehrdeutigkeit entsteht, wenn diese Pakete verschiedene Versionen ein und derselben Softwarekomponente 11 umfassen. Das Verhalten der auf dem Fahrzeug 21 installierten oder aktualisierten Software kann dann von der Reihenfolge der Anwendung dieser Pakete abhängen und unvorhersehbar werden.

Daher besteht ein Bedarf an einem Verfahren, das diese Nachteile vermeidet und mit dem zuverlässig, nachvollziehbar und effizient Softwarekomponenten 11 einer Mehrzahl von Fahrzeugen 20, 21 zugeordnet und auf diesen installiert werden können. Insbesondere besteht ein Bedarf an einem Verfahren, das automatisierbar ist und keine Identifikation eines individuellen Fahrzeugs 20, 21 erfordert.

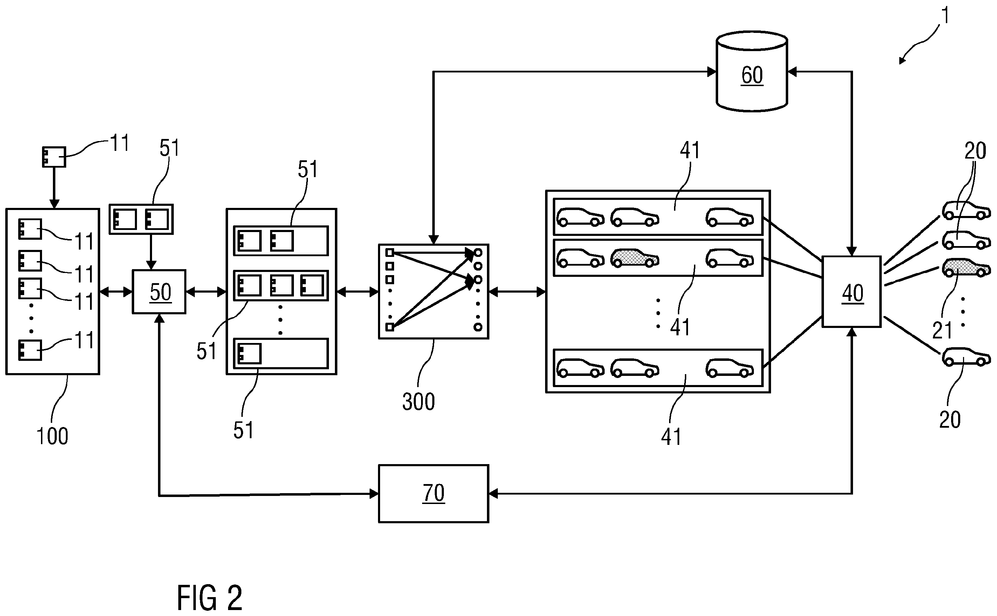

Figur 2 zeigt schematisch ein erfindungsgemäßes Software-Verteilungssystem 1, das ein Anwendungs-Verwaltungssystem 100 (Application Management System, AMS), ein Softwarepaket-Verwaltungssystem 50 (Software Package Management, SPM), eine Paket-Distributionskomponente 300, ein Flotten-Verwaltungssystem 40 (Fleet Management, FM) sowie eine Fahrzeugkonfigurations-Datenbank 60 (Vehicle Configuration Database, VCD) umfasst.

Das Softwarepaket-Verwaltungssystem 50 generiert und verwaltet Softwarepakete 51, denen jeweils mindestens eine, typischerweise jedoch eine Mehrzahl von Softwarekomponenten 11 in jeweils einer definierten Version zugeordnet ist. Ferner ist einem Softwarepaket 51 ein Qualitätszustand zugeordnet, beispielsweise ein initialer Qualitätszustand "neu" ("new"), ein Qualitätszustand "bereit zur Testdurchführung" ("ready for testing") oder ein Qualitätszustand "bereit zur Auslieferung" ("ready for production"). Außerdem ist einem Softwarepaket 51 eine Versionsnummer zugeordnet. Darüber hinaus kann einem Softwarepaket 51 ein Gültigkeitsintervall zugeordnet sein, das den Zeitraum beschreibt, während dem das Softwarepaket 51 auf Fahrzeuge 20, 21 verteilt und/oder dort betrieben werden kann.

Das Softwarepaket-Verwaltungssystem 50 verwaltet Softwarepakete 51 derart, dass Komponenten 11 einem Softwarepaket 51 unveränderlich zugeordnet sind. Eine mit einer gewissen Version dem Softwarepaket 51 zugeordnete Komponente 11 kann nur dadurch gegen eine andere Version desselben Softwarepakets 51 ausgetauscht werden, dass dem Softwarepaket 51 selbst eine neue, inkrementierte Version und zudem erneut ein initialer Qualitätszustand "neu" zugewiesen werden.

Dadurch ist sichergestellt, dass durch ein Softwarepaket 51 und dessen Version die darin umfassten Softwarekomponenten 11 eindeutig und dauerhaft festgelegt sind. Unbeabsichtigte Änderungen eines Softwarepakets 51, die potenziell dessen Qualität kompromittieren könnten, können somit ausgeschlossen werden.

Bevorzugt ist das Softwarepaket-Verwaltungssystem 50 als ein Backend-System auf einem Server oder als Clouddienst außerhalb eines Fahrzeugs 20, 21 bereitgestellt.

Das Anwendungs-Verwaltungssystem 100 ist für die Erfassung, Versionierung und Bereitstellung von Softwarekomponenten 11 eingerichtet. Insbesondere ist es dafür eingerichtet, zu einer Softwarekomponente 11 verschiedene Entwicklungsstände oder Versionen und deren Vorgänger-Nachfolger-Beziehungen (das heißt: einen Baum von Versionen) dauerhaft zu erfassen, so dass ein Entwicklungsstand beispielsweise anhand eines Hashwertes, eines Zeitstempels oder einer Markierung durch eine als "tag" bezeichnete Zeichenkette identifiziert und wiederhergestellt werden kann.

Das Flotten-Verwaltungssystem 40 (Fleet Management, FM) ordnet individuelle, mittels einer VIN identifizierbare Fahrzeuge 20, 21 bevorzugt jeweils einer, optional jeweils mehreren Flotten 41 zu. Eine Flotte 41 wird durch eine Mehrzahl von Fahrzeugen 20, 21 gebildet, die mindestens hinsichtlich ihrer softwarerelevanten Ausstattungsmerkmale, also bezüglich der Installierbarkeit und Ausführbarkeit von Softwarekomponenten 11, gleichwertig sind, deren von diesen Softwarekomponenten 11 betroffene Steuergeräte also beispielsweise mindestens eine gleiche Hardwareplattform aufweisen.

Die Zuordnung von Fahrzeugen 20, 21 zu Flotten 41 wird durch das Flotten-Verwaltungssystem 40 automatisiert anhand von Ausstattungsmerkmalen vorgenommen, die in einer Fahrzeugkonfigurations-Datenbank 60 (Vehicle Configuration Dateabase, VCD) erfasst sind. Alternativ oder zusätzlich können Fahrzeuge 20, 21 manuell einer oder mehreren Flotten 41 zugeordnet werden.

Bevorzugt generiert das Flotten-Verwaltungssystem 40 für einen Satz von softwarerelevanten Ausstattungsmerkmalen eine Mehrzahl äquivalenter Flotten 41 einer gleichen, gemeinsamen Flottenklasse. Die einzelnen Flotten 41 einer Flottenklasse können sich hinsichtlich eines Flottentyps unterscheiden. Ein Flottentyp kann eine Flotte 41 beispielsweise als für Testzwecke vorgesehen kennzeichnen. Alternativ kann ein Flottentyp eine produktiv hergestellte oder eingesetzte Flotte 41 kennzeichnen, die Fahrzeuge 20, 21 umfasst, die bei einem Kunden eingesetzt sind oder potentiell an Kunden verkauft werden können. Ein Flottentyp kann auch eine für besondere Zwecke vorgesehene Flotte 41 kennzeichnen, die beispielsweise Fahrzeuge 20, 21 umfasst, die für bestimmte Marketingveranstaltungen vorgesehen sind.

In einer Ausführungsform wird das Flotten-Verwaltungssystem 40 als Backend-System bereitgestellt, das auf einem Server oder als Clouddienst außerhalb eines Fahrzeugs 20, 21 implementiert ist.

Ansonsten äquivalente (mit gleichen softwarerelevanten Ausstattungsmerkmalen beschriebene) Flotten 41 können abhängig vom Flottentyp in der Softwareaktualisierung unterschiedlich behandelt werden, beispielsweise hinsichtlich des erforderlichen Reifegrades oder Mindest - Qualitätszustands, den eine Softwarekomponente 11 aufweisen muss, um einer Flotte 41 eines gewissen Flottentyps zugeordnet zu werden.

Auch kann einer Flotte 41 unabhängig von dem zugeordneten Flottentyp ein mindestens erforderlicher Qualitätszustand, beispielsweise der Qualitätszustand "bereit zur Auslieferung" zugeordnet werden.

Ferner kann einer Flotte 41 ein Bestimmungszweck zugeordnet werden, beispielsweise der Bestimmungszweck "Auslieferung" oder der Bestimmungszweck "Interne Tests". Dadurch ist es möglich, Softwareaktualisierungen spezifischer auf Flotten 41 zu verteilen. Beispielsweise können Flotten 41 mit dem Bestimmungszweck "Auslieferung" von Softwareaktualisierungen mit Softwarekomponenten 11, die noch Komponententests durchlaufen müssen, ausgenommen werden. Dagegen können Softwareaktualisierungen mit bereits vollständig getesteten Softwarekomponenten 11, zu denen Befragungen zur Nutzerzufriedenheit durchgeführt werden sollen, auf Flotten 41 mit dem Bestimmungszweck "Auslieferung" ausgerollt werden.

Durch die Gruppierung von Softwarekomponenten 11 in Softwarepaketen 51 und durch die Gruppierung von (bezüglich ihrer Kompatibilität mit Softwarepaketen 51 äquivalenten) Fahrzeugen 20, 21 in Flotten 41 kann die Zuordnung von Softwarekomponenten 11 auf individuelle Fahrzeuge 20, 21 gegenüber dem Stand der Technik reduziert werden auf die Zuordnung von Softwarepaketen 51 auf Flotten 41. Diese Zuordnung wird anhand der in der Fahrzeugkonfigurations-Datenbank 60 erfassten Ausstattungsmerkmale durch die Paket-Distributionskomponente 300 vorgenommen. Die gegenüber der vorbekannten Fahrzeug-Zuordnungskomponente 30 reduzierte Komplexität dieser Zuordnungsaufgabe ist in Figur 2 durch die geringere vertikale Ausdehnung verdeutlicht (entsprechend der gegenüber der Anzahl von Softwarekomponenten 11 geringen Anzahl von Softwarepaketen 51 und/oder der gegenüber der Anzahl von Fahrzeugen 20, 21 geringeren Anzahl von Flotten 41). Bevorzugt wird die Paket-Distributionskomponente 300 als Backend-System bereitgestellt, das außerhalb des Fahrzeugs 20, 21 als Server oder Clouddienst umgesetzt ist.

Ferner ist ein Qualitätssicherungssystem 70 (Quality Assurance System, QAS) zwischen dem Softwarepaket-Verwaltungssystem 50 und dem Flotten-Verwaltungssystem 40 angeordnet. Mit dem Qualitätssicherungssystem 70 wird, abhängig von den Ergebnissen der Testung und/oder anderer Qualitätssicherungsmaßnahmen mit Bezug auf die Softwarekomponenten 11 eines Softwarepakets 51 ein Qualitätszustand ermittelt. Der ermittelte Qualitätszustand wird durch das Softwarepaket-Verwaltungssystem 50 einer Version des Softwarepakets 51 zugeordnet, die eine Menge von Softwarekomponenten 11 in festgelegten, unveränderlichen Versionen umfasst.

Nachfolgend wird der Ablauf bei einer Softwareaktualisierung auf einem ersten Fahrzeug 21 mit dem Software-Verteilungssystem 1 beschrieben.

Vor der Verteilung stellt das erste Fahrzeug 21 an die Paket-Distributionskomponente 300 eine Anfrage nach passenden Softwarekomponenten 11. Anhand der dieser Anfrage übergebenen VIN fordert die Paket-Distributionskomponente 300 von dem Flotten-Verwaltungssystem 40 die Zuordnung des anfragenden ersten Fahrzeugs 21 zu einer Flotte 41 ab. Das Flotten-Verwaltungssystem 40 ermittelt anhand der VIN des ersten Fahrzeugs 21 dessen zugeordnete Flotte 41.

Die Paket-Distributionskomponente 300 ermittelt sodann anhand der zugeordneten Flotte 41 ein Softwarepaket 51, das für das erste Fahrzeug 21 vorgesehen ist. Dabei berücksichtigt die Paket-Distributionskomponente 300 den Qualitätszustand des Softwarepakets 51 sowie dessen Version und ferner den Flottentyp, den Bestimmungszweck und optional weitere, der Flotte 41 zugewiesene Attribute nach einem vorgegebenen Regelwerk. Beispielsweise kann dadurch ausgeschlossen werden, dass ein Softwarepaket 51 in einer Version, der nicht mindestens der Qualitätszustand "bereit zur Auslieferung" zugewiesen ist, auf ein Fahrzeug 21 ausgeliefert wird, das einer Flotte 41 mit dem Bestimmungszweck "Auslieferung" oder mit dem Flottentyp "Kundenflotte" angehört.

Nachdem die Paket-Distributionskomponente 300 das für das erste Fahrzeug 21 vorgesehene Softwarepaket 51 ermittelt hat, bezieht sie dieses ermittelte Softwarepaket 51 von dem Softwarepaket-Verwaltungssystem 50. Das bevorzugt als Backend-System ausgestaltete Softwarepaket-Verwaltungssystem 50 liefert eine Liste der in dem angefragten Softwarepaket 51 umfassten Softwarekomponenten 11 mit ihren jeweiligen Versionen zurück.

Diese Liste von Softwarekomponenten 11 wird von der Paket-Distributionskomponente 300 an das erste Fahrzeug 21 auf dessen Anfrage nach passenden Softwarekomponenten 11 zurückgegeben. Daraufhin lädt das erste Fahrzeug 21 die in der Liste aufgeführten Softwarekomponenten 11 von dem Anwendungs-Verwaltungssystem 100 herunter und installiert sie auf dem vorgesehenen Steuergerät oder der Mehrzahl von vorgesehenen Steuergeräten.

Zur Erstellung eines Softwarepakets 51 wird dem Softwarepaket-Verwaltungssystem 50 eine Beschreibung übergeben, die eine Liste von Merkmalen derjenigen Fahrzeuge 20, 21 umfasst, für die das Softwarepaket 51 vorgesehen ist. Anhand dieser Beschreibung prüft das Softwarepaket-Verwaltungssystem 50 die Verträglichkeit des Softwarepakets 51 mit bereits erfassten und/oder verteilten Softwarepaketen 51.

Beispielsweise weist das Softwarepaket-Verwaltungssystem 50 die Anforderung zur Erstellung eines Softwarepakets 51 zurück, wenn für einen zu der übergebenen Liste gleichen Satz von Merkmalen von Fahrzeugen 20, 21 bereits ein anderes Softwarepaket 51 erfasst und/oder verteilt wurde, um eine Zuordnung von mehreren Softwarepaketen 51 zu einem Fahrzeug 20, 21 zu vermeiden.

Ferner kann das Softwarepaket-Verwaltungssystem 50 die Konsistenz der in der Liste übergebenen Merkmale überprüfen. Beispielsweise kann durch Abgleich mit der Fahrzeugkonfigurations-Datenbank 60 überprüft werden, ob dort Fahrzeuge 20, 21 mit der übergebenen Kombination von Merkmalen, beispielsweise mit einer Kombination eines Fahrzeugmodells mit einer Hardware-Ausstattungsvariante eines Steuergeräts, erfasst sind.

Ferner kann das Softwarepaket-Verwaltungssystem 50 die in der Liste übergebenen Merkmale auf Eindeutigkeit überprüfen. Beispielsweise könnte ein bereits erfasstes Softwarepaket 51 einem bestimmten Fahrzeugmodell mit einer Hardware-Ausstattungsvariante HW-A eines Steuergeräts zugeordnet sein. Wenn in der Liste als Merkmal dasselbe Fahrzeugmodell mit einem Motorentyp E-A kombiniert ist, überprüft das Softwarepaket-Verwaltungssystem 50 durch Abgleich mit der Fahrzeugkonfigurations-Datenbank 60, ob Fahrzeuge 20, 21 dieses Fahrzeugmodells erfasst sind, die sowohl die Ausstattungsvariante HW-A des Steuergeräts als auch den Motorentyp E-A aufweisen. Falls solche Fahrzeuge 20, 21 erfasst sind, teilt das Softwarepaket-Verwaltungssystem 50 die Menge dieser Fahrzeuge 20, 21 in disjunkte Teilmengen auf. Alternativ weist das Softwarepaket-Verwaltungssystem 50 die Anforderung zur Erstellung eines Softwarepakets 51 basierend auf der übergebenen Liste von Merkmalen zurück, um die Zuordnung verschiedener Softwarepakete 51 zu diesen Fahrzeugen 20, 21 zu verhindern.

Für ein neues Software-Paket 51 legt das Softwarepaket-Verwaltungssystem 50 auch eine initiale Version ("Version 0") an und weist dieser den Qualitätszustand "neu" zu.

Das Softwarepaket-Verwaltungssystem 50 veranlasst zudem die Erstellung von Flotten 41 durch das Flotten-Verwaltungssystem 40. Dabei erzeugt das Flotten-Verwaltungssystem 40 zunächst eine Flottenklasse, das heißt: eine Abstraktion aller möglichen Flotten 41, welche gleichen softwarerelevanten Ausstattungsmerkmalen zugeordnet werden können. Nachfolgend erzeugt das Flotten-Verwaltungssystem 40 zu einer solchen Flottenklasse mindestens eine, bevorzugt mehrerer Flotten 41, die jeweils mindestens ein Fahrzeug 20, 21, bevorzugt mehrere Fahrzeuge 20, 21 umfassen.

Das Flotten-Verwaltungssystem 40 speichert zu jeder der Flottenklassen die Liste der zugeordneten Ausstattungsmerkmale (beispielsweise umfassend das Fahrzeugmodell, die Ausführungsvariante und optional auch den Entwicklungsstand einer Hardwareplattform für ein Steuergerät oder mehrere Steuergeräte und/oder einen Motorentyp sowie weitere Merkmale). Jeder Flottenklasse wird zudem ein Softwarepaket 51 zugeordnet und gespeichert.

Nach der Erzeugung der Flottenklasse werden nun durch das Flotten-Verwaltungssystem 40 mindestens eine, bevorzugt mehrere Flotten 41 erzeugt und der Flottenklasse zugeordnet. Den Flotten 41 derselben Flottenklasse werden disjunkte Teilmengen der Menge der Fahrzeuge 20, 21 zugeordnet, die die Ausstattungsmerkmale aufweisen, welche der Flottenklasse zugeordnet wurden. Dies betrifft aktuelle (das heißt: bereits hergestellte) und zukünftig hergestellte Fahrzeuge 20, 21. Die Flotten 41 derselben Flottenklasse können sich jedoch hinsichtlich anderer Attribute unterscheiden, beispielsweise hinsichtlich des Flottentyps, des (für eine Installation eines Softwarepakets 51 auf Fahrzeugen 20, 21 der jeweiligen Flotte 41 erforderlichen) Mindest - Qualitätszustands und/oder hinsichtlich des Bestimmungszwecks.

Wie bereits erläutert wurde, kann eine erste Flotte 41 einer Flottenklasse als Flotte 41 von Testfahrzeugen ausgeprägt sein, mit denen Tests durchgeführt werden. Eine zweite Flotte 41 derselben Flottenklasse kann als Marketingflotte ausgeprägt sein. Fahrzeuge 20, 21 dieser Flottenklasse werden für Marketing-Events oder Roadshows eingesetzt. Eine dritte Flotte 41 derselben Flottenklasse kann als Produktivflotte diejenigen Fahrzeuge 20, 21 umfassen, die von einem Kunden eingesetzt werden oder für einen solchen Einsatz vorgesehen sind.

Die Flotten 41 werden bevorzugt automatisch durch das Flotten-Verwaltungssystem 40 gebildet, indem von der Fahrzeugkonfigurations-Datenbank 60 zunächst die Gesamtheit der Fahrzeuge 20, 21 abgerufen wird, die die Ausstattungsmerkmale aufweisen, welche der jeweiligen Flottenklasse zugeordnet wurden. Aus dieser Gesamtheit werden dann Fahrzeuge 20, 21 ausgewählt und der Flotte 41 zugewiesen, die den der Flotte 41 zugeordneten Bestimmungszweck (entweder "Auslieferung" oder "Interne Tests") und optional noch weitere Merkmale aufweisen.

Indem Fahrzeuge 20, 21 mit softwarerelevant äquivalenten (das heißt: für die Installation gleicher Softwarepakete 51 eingerichteten) Ausstattungsmerkmalen in disjunkte Flotten 41 unterteilt werden, wird die gezielte Ausführung von Tests in bestimmten Einsatzumgebungen ermöglicht. Zugleich werden Fahrzeuge 20, 21 in kritischen Einsatzumgebungen (typischerweise solche Fahrzeuge 20, 21, die einer Produktivflotte zugeordnet wurden und/oder deren Bestimmungszweck "Auslieferung" ist) vor der Installation von Softwarepaketen 51 geschützt, die noch keinen für diese Einsatzumgebung ausreichenden Qualitätszustand aufweisen.

Neu entwickelte oder aktualisierte, das heißt: in einer neuen Version bereitgestellte Softwarekomponenten 11 werden in dem Anwendungs-Verwaltungssystem 100 erfasst. Bei der Erfassung werden neben der Softwarekomponente 11 selbst deren eindeutige Bezeichnung, deren Version sowie die Liste der Ausstattungsmerkmale eines Fahrzeugs 20, 21, die für die Installation erforderlich sind, erfasst und gespeichert. Diese erforderlichen Ausstattungsmerkmale können als Attribute oder Label zugeordnet werden.

Anschließend wird eine neu oder in neuer Version bereitgestellte Softwarekomponente 11 durch das Softwarepaket-Verwaltungssystem 50 den Softwarepaketen 51 hinzugefügt, denen
- der Qualitätszustand "neu" ("new") aktuell zugeordnet ist und
- denen die für die neu bereitgestellte Softwarekomponente 11 als erforderlich ausgewiesenen Merkmale eines Fahrzeugs 20, 21 zugeordnet sind.

Dadurch wird erreicht, dass neue und noch nicht ausreichend getestete Softwarekomponenten 11 nicht in kritische Betriebsumgebungen mit hohen Qualitätsanforderungen ausgerollt werden.

In vorbestimmten Abständen oder auf Anforderung holt das Softwarepaket-Verwaltungssystem 50 die Bestätigung eines Freigabeverantwortlichen zur Erzeugung einer neuen Version eines jeden Softwarepakets 51 ein, dem eine neue (oder in neuer Version vorliegende) Softwarekomponente 11 hinzugefügt wurde. Wenn die Bestätigung erteilt wird, wird der Qualitätszustand der betroffenen Softwarepakete 51 von "neu" auf "Paketbildung abgeschlossen" ("creation completed") gesetzt. Danach wird für jedes betroffene Softwarepaket 51 eine neue Version des Softwarepakets 51 erzeugt, wobei jede der umfassten Softwarekomponenten 11 in die neue Version des Softwarepakets 51 übernommen und diesem der Qualitätszustand "neu" ("new") zugeordnet wird.

Mit dem Qualitätszustand "Paketbildung abgeschlossen" ("creation completed") versehene Softwarepakete 51 werden daraufhin durch das Qualitätssicherungssystem 70 verifiziert. Das Qualitätssicherungssystem 70 wird über die Änderung des Qualitätszustands von "neu" auf "Erzeugung abgeschlossen" informiert und fordert daraufhin vom Flotten-Verwaltungssystem 40 eine für das jeweilige Softwarepaket 51 geeignete Flotte 41 für die Verifizierung an. Das Flotten-Verwaltungssystem 40 ermittelt mindestens eine geeignete Flotte 41 anhand der dem Softwarepaket 51 zugeordneten Merkmale und/oder anhand der zugeordneten Zweckbestimmung und/oder anhand des Mindest-Qualitätszustands.

Die Verifizierung kann automatisiert, beispielsweise durch formale Verifikationswerkzeuge, Unittests oder andere automatisierte Testverfahren erfolgen. Alternativ oder ergänzend kann die Verifizierung auch manuell, beispielsweise durch Reviews oder manuelle Tests erfolgen.

Lediglich beispielhaft können Smoke Tests durchgeführt werden, die den Erfolg des Verteilens des Softwarepakets 51 auf den Steuergeräten der der Flotte 41 zugeordneten Fahrzeugen 20, 21 testen. Zusätzlich oder alternativ können Funktionstests durchgeführt werden. Beispielsweise kann getestet werden, ob eine Sitzheizung von der Heizungssteuerungsfunktion des mit dem Softwarepaket 51 ausgestatteten Steuergeräts korrekt gesteuert wird. Ebenso können Integrationstests ausgeführt werden, wie beispielsweise die Übertragung von Points of Interest (POls) von einem Smartphone an die Navigationsfunktion des mit dem Softwarepaket 51 ausgestatteten Steuergeräts oder die Überprüfung des Zusammenspiels zwischen einer solchen Navigationsfunktion und einer Funktion zum Planen der Fahrzeugbatterieladung eines elektrisch betriebenen Fahrzeugs 20, 21.

Konkrete Verifizierungsmaßnahmen werden entsprechend den Merkmalen des jeweiligen Softwarepakets 51, der zugeordneten Flotte 41 von Testfahrzeugen, des aktuellen Qualitätszustands und/oder der zugeordneten Version ermittelt.

Nach erfolgreichem Abschluss der Verifizierung wird dem jeweiligen Softwarepaket 51 der Qualitätszustand "bereit zur Auslieferung" zugeordnet. Dabei können, abhängig vom Verlauf der Verifizierungsmaßnahmen, zwischen dem Qualitätszustand "Erzeugung abgeschlossen" und dem Qualitätszustand "bereit zur Auslieferung" weitere Qualitätszustände zugeordnet werden, beispielsweise der Qualitätszustand "Integrationstests abgeschlossen" ("completed service integration tests") oder der Qualitätszustand "Qualitätsmanagement-Tests abgeschlossen" ("completed quality management tests"). In der genannten Reihenfolge stellen diese Qualitätszustände zunehmende Qualitätsniveaus dar.

Qualitätszustände werden aufeinanderfolgend in Abhängigkeit vom Erfolg der durchgeführten Verifizierungs- und/oder Qualitätssicherungsmaßnahmen zugeordnet.

Während seiner Lebensdauer fragt ein Fahrzeug 20, 21 regelmäßig, beispielsweise mit jedem Startvorgang, bei der Paket-Distributionskomponente 300 die aktuelle Liste von Softwarekomponenten 11 für das Steuergerät oder die Steuergeräte ab, wobei die VIN des Fahrzeugs 20, 21 übergeben wird.

Die Paket-Distributionskomponente 300 ermittelt daraufhin das aktuelle, diesem Fahrzeug 20, 21 zugeordnete Softwarepaket 51 wie folgt: Anhand der übergebenen VIN bestimmt die Paket-Distributionskomponente 300 durch Abfrage der Fahrzeugkonfigurations-Datenbank 60 die Merkmale des Fahrzeugs 20, 21. Anhand dieser Merkmale ermittelt die Paket-Distributionskomponente 300 durch Abfrage des Flotten-Verwaltungssystems 40 diejenige Flotte 41, die dem Bestimmungszweck des Fahrzeugs 20, 21 zugeordnet ist und die die größte Übereinstimmung zu dessen Merkmalen aufweist.

Das derart ermittelte Softwarepaket 51 wird von dem Softwarepaket-Verwaltungssystem 50 in der letzten (jüngsten) Version bezogen, deren Gültigkeitsintervall den Zeitpunkt der Abfrage umfasst und deren zugeordneter Qualitätszustand gleich dem Mindest - Qualitätszustand ist, welcher der Flotte 41 des anfragenden Fahrzeugs 20, 21 zugeordnet wurde.

Die in dem Softwarepaket 51 mit dieser Version umfassten Softwarekomponenten 11 werden an das anfragende Fahrzeug 20, 21 übertragen und auf dessen Steuergerät oder Steuergeräten installiert.

## Patentansprüche

1. Verfahren zur Verteilung von mindestens einer Softwarekomponente (11) auf mindestens ein Fahrzeug (20, 21),
**dadurch gekennzeichnet, dass**
- aus einer Gesamtheit von Fahrzeugen (20, 21) mit mindestens einem gemeinsamen Ausstattungsmerkmal mindestens eine Flotte (41) gebildet wird, wobei einer Flotte (41) jeweils mindestens ein Mindest - Qualitätszustand sowie ein Flottentyp und/oder ein Bestimmungszweck zugeordnet werden/wird, wobei ein Mindest - Qualitätszustand den Grad an erfolgreich abgeschlossenen Qualitätssicherungsmaßnahmen kennzeichnet, den Softwarekomponenten (11) aufweisen müssen, damit sie auf Fahrzeugen (20, 21) der Flotte (41) ausgerollt werden können,
- mindestens ein Softwarepaket (51) jeweils umfassend mindestens eine Softwarekomponente (11) in einer dem Softwarepaket (51) jeweils fest zugeordneten Version gebildet wird, wobei jede Softwarekomponente (11) zu dem mindestens einen gemeinsamen Ausstattungsmerkmal mindestens einer Flotte (41) sowie, bei einer Mehrzahl von Softwarekomponenten (11), zu den weiteren Softwarekomponenten (11) kompatibel ist,
- jedem Softwarepaket (51) abhängig vom Ergebnis von darauf durchgeführten Qualitätssicherungsmaßnahmen ein Qualitätszustand zugeordnet wird, und
- ein Softwarepaket (51) jeweils mindestens einer Flotte (41) anhand des mindestens einen gemeinsamen Ausstattungsmerkmals sowohl der Flotte (41) als auch des Softwarepakets (51), anhand des Qualitätszustands des Softwarepakets (51) und mindestens anhand des Mindest - Qualitätszustands der jeweiligen Flotte (41) sowie des Flottentyps der jeweiligen Flotte (41) und/oder des Bestimmungszwecks der jeweiligen Flotte (41) zugeordnet wird und
- die Softwarekomponenten (11) eines einer Flotte (41) jeweils zugeordneten Softwarepakets (51) auf mindestens ein Fahrzeug (20, 21) der jeweiligen Flotte (41) übertragen und auf jeweils mindestens einem Steuergerät installiert werden
- wobei das Softwarepaket (51) der Flotte (41) nur dann zugeordnet wird, wenn der dem Softwarepaket (51) zugeordnete Qualitätszustand dem Mindest-Qualitätszustand der Flotte (41) entspricht.

2. Verfahren nach Anspruch 1,
**dadurch gekennzeichnet, dass**
für eine Gesamtheit von Fahrzeugen (20, 21) mit mindestens einem gemeinsamen Ausstattungsmerkmal mindestens eine erste Flotte (41) mit einem für Testzwecke vorgesehenen Flottentyp sowie mindestens eine zweite Flotte (41) mit einem für die Auslieferung an und/oder den Betrieb bei einem Kunden vorgesehenen Flottentyp gebildet werden, wobei der ersten Flotte (41) ein anderer Mindest - Qualitätszustand als der zweiten Flotte (41) derart zugeordnet wird, dass ein Softwarepaket (51) mit einem für Testzwecke vorgesehenen Qualitätszustand dem mindestens einen Fahrzeug (20, 21) der ersten Flotte (41), jedoch nicht dem mindestens einen Fahrzeug (20, 21) der zweiten Flotte (41) zugeordnet wird.

3. Verfahren nach einem der vorhergehenden Ansprüche,
**dadurch gekennzeichnet, dass**
der einem Softwarepaket (51) jeweils zugeordnete Qualitätszustand sowie ein jeweils einer Flotte (41) zugeordneter Mindest - Qualitätszustand einer geordneten Liste entnommen sind.

4. Verfahren nach Anspruch 3,
**dadurch gekennzeichnet, dass**
die geordnete Liste die Werte "neu", "Paketbildung abgeschlossen", "Integrationstests abgeschlossen" und "Qualitätsmanagement-Tests abgeschlossen" umfasst.

5. Verfahren nach Anspruch 4,
**dadurch gekennzeichnet, dass**
bei einem Wechsel des Qualitätszustands eines ursprünglichen Softwarepakets (51) vom Wert "neu" in einen anderen Wert eine neue Version des Softwarepakets (51) erzeugt und dieser der Qualitätszustand "neu" zugeordnet wird, wobei die der ursprünglichen Version des Softwarepakets (51) zugeordneten Softwarekomponenten (11) der neuen Version des Softwarepakets (51) zugeordnet werden.

6. Verfahren nach einem der vorhergehenden Ansprüche,
**dadurch gekennzeichnet, dass**
ein Softwarepaket (51) erzeugt und anschließend passend zu dem mindestens einen gemeinsamem Ausstattungsmerkmal dieses Softwarepakets (51) mindestens eine erste und eine zweite Flotte (41) gebildet werden.

7. Verfahren nach einem der vorhergehenden Ansprüche,
**dadurch gekennzeichnet, dass**
bei der Erzeugung eines Softwarepaket (51) das diesem Softwarepaket (51) zugeordnete mindestens eine Ausstattungsmerkmal ermittelt wird und eine Erzeugung zurückgewiesen wird, wenn diesem mindestens einen Ausstattungsmerkmal bereits ein existierendes Softwarepakets (51) zugeordnet ist.

8. Software-Verteilungssystem (1) zur Verteilung von mindestens einer Softwarekomponente (11) auf mindestens ein Fahrzeug (20, 21) nach einem Verfahren der vorhergehenden Ansprüche,
**dadurch gekennzeichnet, dass**
das Software-Verteilungssystem (1) umfasst:
- eine Fahrzeugkonfigurations-Datenbank (60), die zur Zuordnung von Ausstattungsmerkmalen zu einem Fahrzeug (20, 21) eingerichtet ist,
- ein Anwendungs-Verwaltungssystem (100), das zur Verwaltung von Softwarekomponenten (11) mit zugeordneten Versionen eingerichtet ist,
- ein Softwarepaket-Verwaltungssystem (50), das zur Erfassung von mindestens einem Softwarepaket (51) umfassend jeweils mindestens eine Softwarekomponente (11) sowie zur Zuordnung von einem Qualitätszustand zu dem mindestens einen Softwarepaket (51) eingerichtet ist,
- ein Flotten-Verwaltungssystem (40), das zur Zuordnung eines Fahrzeugs (20, 21) zu einer Flotte (41) sowie zur Zuordnung von mindestens einem Ausstattungsmerkmal und von einem Mindest - Qualitätszustand sowie von einem Flottentyp und/oder einem Bestimmungszweck zu einer Flotte (41) eingerichtet ist, wobei ein Mindest - Qualitätszustand den Grad an erfolgreich abgeschlossenen Qualitätssicherungsmaßnahmen kennzeichnet, den Softwarekomponenten (11) aufweisen müssen, damit sie auf Fahrzeugen (20, 21) der Flotte (41) ausgerollt werden können, sowie
- eine Paket-Distributionskomponente (300), die zur Zuordnung von einem Softwarepaket (51) zu dem mindestens einen Fahrzeug (20, 21) einer Flotte (41) anhand des mindestens einen gemeinsamen Ausstattungsmerkmals sowohl der Flotte (41) als auch des Softwarepakets (51), anhand des Qualitätszustands des Softwarepakets (51) und mindestens anhand des Mindest - Qualitätszustands der jeweiligen Flotte (41) sowie des Flottentyps der jeweiligen Flotte (41) und/oder des Bestimmungszwecks der jeweiligen Flotte (41) und zur Übertragung mindestens einer Softwarekomponente (11) eines einer Flotte (41) jeweils zugeordneten Softwarepakets (51) auf mindestens ein Fahrzeug (20, 21) der jeweiligen Flotte (41) eingerichtet ist,
- wobei das Softwarepaket (51) der Flotte (41) nur dann zugeordnet wird, wenn der dem Softwarepaket (51) zugeordnete Qualitätszustand dem Mindest-Qualitätszustand der Flotte (41) entspricht.

9. Software-Verteilungssystem (1) nach Anspruch 8,
**dadurch gekennzeichnet, dass**
das Anwendungs-Verwaltungssystem (100) und/oder das Softwarepaket-Verwaltungssystem (50) und/oder das Flotten-Verwaltungssystem (40) und/oder die Paket-Distributionskomponente (300) und/oder die Fahrzeugkonfigurations-Datenbank (60) als Backendsystem ausgebildet ist beziehungsweise sind.

## Claims

1. Method for distributing at least one software component (11) to at least one vehicle (20, 21),
**characterized in that**
- a fleet (41) is formed from a collective of vehicles (20, 21) having at least one common equipment feature, at least one minimum quality status as well as a fleet type and/or an intended use being assigned to each fleet (41), a minimum quality status indicating the degree of successfully completed quality assurance measures that the software components (11) must have in order to be rolled out to vehicles (20, 21) of the fleet (41),
- at least one software package (51) is formed, each comprising at least one software component (11) in a version permanently assigned to the software package (51), each software component (11) being compatible with the at least one common equipment feature of at least one fleet (41) and, in the case of a plurality of software components (11), with the other software components (11),
- each software package (51) is assigned a quality status depending on the result of quality assurance measures carried out thereon, and
- a software package (51) is assigned to at least one fleet (41) in each case, based on the at least one common equipment feature of both the fleet (41) and the software package (51), based on the quality status of the software package (51) and at least based on the minimum quality status of the relevant fleet (41) as well as the fleet type of the relevant fleet (41) and/or the intended use of the relevant fleet (41), and
- the software components (11) of a software package (51) assigned to each fleet (41) are transferred to at least one vehicle (20, 21) of the relevant fleet (41) and installed on at least one control unit in each case,
- the software package (51) being assigned to the fleet (41) only if the quality status assigned to the software package (51) corresponds to the minimum quality status of the fleet (41).

2. Method according to claim 1,
**characterized in that,**
for a collective of vehicles (20, 21) having at least one common equipment feature, at least a first fleet (41), having a fleet type intended for testing purposes, and at least a second fleet (41), having a fleet type intended for delivery to and/or operation by a customer, are formed, the first fleet (41) being assigned a minimum quality status different from that of the second fleet (41) such that a software package (51) having a quality status intended for testing purposes is assigned to the at least one vehicle (20, 21) of the first fleet (41), but not to the at least one vehicle (20, 21) of the second fleet (41).

3. Method according to any of the preceding claims,
**characterized in that**
the quality status assigned to each software package (51) and a minimum quality status assigned to each fleet (41) are taken from a sequenced list.

4. Method according to claim 3,
**characterized in that**
the sequenced list includes the values "new", "package creation complete", "integration tests complete" and "quality management tests complete".

5. Method according to claim 4,
**characterized in that,**
when the quality status of an original software package (51) changes from the value "new" to a different value, a new version of the software package (51) is generated and the quality status "new" is assigned thereto, the software components (11) assigned to the original version of the software package (51) being assigned to the new version of the software package (51).

6. Method according to any of the preceding claims,
**characterized in that**
a software package (51) is generated and then at least one first and one second fleet (41) are formed corresponding to the at least one common equipment feature of this software package (51).

7. Method according to any of the preceding claims,
**characterized in that,**
when generating a software package (51), the at least one equipment feature assigned to this software package (51) is determined and generation is rejected if an existing software package (51) is already assigned to this at least one equipment feature.

8. Software distribution system (1) for distributing at least one software component (11) to at least one vehicle (20, 21) according to a method of the preceding claims,
**characterized in that**
the software distribution system (1) comprises:
- a vehicle configuration database (60), which is configured to assign equipment features to a vehicle (20, 21),
- an application management system (100), which is configured to manage software components (11) having associated versions,
- a software package management system (50), which is configured to detect at least one software package (51) comprising at least one software component (11) and to assign a quality status to the at least one software package (51),
- a fleet management system (40), which is configured to assign a vehicle (20, 21) to a fleet (41) and to assign at least one equipment feature and a minimum quality status, as well as a fleet type and/or an intended use, to a fleet (41), a minimum quality status indicating the degree of successfully completed quality assurance measures that software components (11) must have in order to be rolled out to vehicles (20, 21) of the fleet (41), and
- a package distribution component (300), which is configured to assign a software package (51) to the at least one vehicle (20, 21) of a fleet (41) based on the at least one common equipment feature of both the fleet (41) and the software package (51), based on the quality status of the software package (51) and at least based on the minimum quality status of the relevant fleet (41) as well as the fleet type of the relevant fleet (41) and/or the intended use of the relevant fleet (41), and to transfer at least one software component (11) of a software package (51) assigned to each fleet (41) to at least one vehicle (20, 21) of the relevant fleet (41),
- the software package (51) being assigned to the fleet (41) only if the quality status assigned to the software package (51) corresponds to the minimum quality status of the fleet (41).

9. Software distribution system (1) according to claim 8,
**characterized in that**
the application management system (100) and/or the software package management system (50) and/or the fleet management system (40) and/or the package distribution component (300) and/or the vehicle configuration database (60) is or are in the form of a backend system.

## Revendications

1. Procédé permettant de distribuer au moins un composant logiciel (11) sur au moins un véhicule (20, 21),
**caractérisé en ce que**
- à partir d'un ensemble de véhicules (20, 21) comportant au moins une caractéristique d'équipement commune, au moins une flotte (41) est formée, dans lequel à une flotte (41), respectivement au moins un état de qualité minimal ainsi qu'un type de flotte et/ou un objet de destination est/sont attribué(s), dans lequel un état de qualité minimal caractérise le degré de mesures d'assurance qualité achevées avec succès que doivent présenter des composants logiciels (11) pour qu'ils puissent être déployés sur des véhicules (20, 21) de la flotte (41),
- au moins un progiciel (51) comprenant respectivement au moins un composant logiciel (11) est formé dans une version respectivement attribuée de manière fixe au progiciel (51), dans lequel chaque composant logiciel (11) est compatible avec l'au moins une caractéristique d'équipement commune d'au moins une flotte (41) ainsi que, dans le cas d'une pluralité de composants logiciels (11), avec les autres composants logiciels (11),
- un état de qualité est attribué à chaque progiciel (51) en fonction du résultat des mesures d'assurance qualité effectuées sur celui-ci, et
- un progiciel (51) est attribué respectivement à au moins une flotte (41) à l'aide de l'au moins une caractéristique d'équipement commune aussi bien de la flotte (41) que du progiciel (51), à l'aide de l'état de qualité du progiciel (51) et au moins à l'aide de l'état de qualité minimal de la flotte (41) respective ainsi que du type de flotte de la flotte (41) respective et/ou de l'objet de destination de la flotte (41) respective et
- les composants logiciels (11) d'un progiciel (51) respectivement attribué à une flotte (41) sont transmis à au moins un véhicule (20, 21) de la flotte (41) respective et sont installés sur respectivement au moins un appareil de commande
- dans lequel le progiciel (51) n'est attribué à la flotte (41) que si l'état de qualité attribué au progiciel (51) correspond à l'état de qualité minimal de la flotte (41).

2. Procédé selon la revendication 1,
**caractérisé en ce que**
pour un ensemble de véhicules (20, 21) comportant au moins une caractéristique d'équipement commune, au moins une première flotte (41), comportant un type de flotte prévu à des fins de test, ainsi qu'au moins une seconde flotte (41), comportant un type de flotte prévu pour la livraison à un client et/ou le fonctionnement chez celui-ci, sont formées, dans lequel un autre état de qualité minimal que celui de la seconde flotte (41) est attribué à la première flotte (41) de telle sorte qu'un progiciel (51) comportant un état de qualité prévu à des fins de test est attribué à au moins un véhicule (20, 21) de la première flotte (41), mais pas à l'au moins un véhicule (20, 21) de la seconde flotte (41).

3. Procédé selon l'une des revendications précédentes,
**caractérisé en ce que**
l'état de qualité respectivement attribué à un progiciel (51) ainsi qu'un état de qualité minimal respectivement attribué à une flotte (41) sont extraits d'une liste ordonnée.

4. Procédé selon la revendication 3,
**caractérisé en ce que**
la liste ordonnée comprend les valeurs « nouveau », « formation de progiciel achevée », « tests d'intégration achevés » et « tests de gestion de qualité achevés ».

5. Procédé selon la revendication 4,
**caractérisé en ce que**
lors d'un changement de l'état de qualité d'un progiciel (51) initial de la valeur « nouveau » à une autre valeur, une nouvelle version du progiciel (51) est générée et l'état de qualité « nouveau » lui est attribué, dans lequel les composants logiciels (11) attribués à la version initiale du progiciel (51) sont attribués à la nouvelle version du progiciel (51).

6. Procédé selon l'une des revendications précédentes,
**caractérisé en ce que**
un progiciel (51) est généré et ensuite au moins une première et une seconde flotte (41) sont formées de manière adaptée à l'au moins une caractéristique d'équipement commune de ce progiciel (51).

7. Procédé selon l'une des revendications précédentes,
**caractérisé en ce que**
lors de la génération d'un progiciel (51), l'au moins une caractéristique d'équipement attribuée à ce progiciel (51) est déterminée et une génération est refusée si un progiciel (51) existant est déjà attribué à cette au moins une caractéristique d'équipement.

8. Système de distribution de logiciel (1) permettant de distribuer au moins un composant logiciel (11) sur au moins un véhicule (20, 21) selon un procédé des revendications précédentes,
**caractérisé en ce que**
le système de distribution de logiciel (1) comprend :
- une base de données de configurations de véhicule (60), qui est conçue pour attribuer des caractéristiques d'équipement à un véhicule (20, 21),
- un système de gestion d'applications (100), qui est conçu pour gérer des composants logiciels (11) comportant des versions attribuées,
- un système de gestion de progiciel (50), qui est conçu pour détecter au moins un progiciel (51) comprenant respectivement au moins un composant logiciel (11) ainsi que pour attribuer un état de qualité à l'au moins un progiciel (51),
- un système de gestion de flotte (40) qui est conçu pour l'attribution d'un véhicule (20, 21) à une flotte (41) ainsi que pour l'attribution d'au moins une caractéristique d'équipement et d'un état de qualité minimal ainsi que d'un type de flotte et/ou d'un objet de destination à une flotte (41), dans lequel un état de qualité minimal caractérise le degré de mesures d'assurance qualité achevées avec succès que doivent présenter des composants logiciels (11) pour qu'ils puissent être déployés sur des véhicules (20, 21) de la flotte (41), ainsi que
- un composant de distribution de progiciel (300) qui est conçu pour l'attribution d'un progiciel (51) à l'au moins un véhicule (20, 21) d'une flotte (41) à l'aide de l'au moins une caractéristique d'équipement commune aussi bien de la flotte (41) que du progiciel (51), à l'aide de l'état de qualité du progiciel (51) et au moins à l'aide de l'état de qualité minimal de la flotte (41) respective ainsi que du type de flotte de la flotte (41) respective et/ou de l'objet de destination de la flotte (41) respective et pour la transmission d'au moins un composant logiciel (11) d'un progiciel (51) respectivement attribué à une flotte (41) à au moins un véhicule (20, 21) de la flotte (41) respective,
- dans lequel le progiciel (51) n'est attribué à la flotte (41) que si l'état de qualité attribué au progiciel (51) correspond à l'état de qualité minimal de la flotte (41).

9. Système de distribution de logiciel (1) selon la revendication 8,
**caractérisé en ce que**
le système de gestion d'applications (100) et/ou le système de gestion de progiciel (50) et/ou le système de gestion de flotte (40) et/ou le composant de distribution de progiciel (300) et/ou la base de données de configurations de véhicule (60) est/sont réalisé(s) comme un système dorsal.
